# EUROPEAN PATENT APPLICATION

(11) **EP 3 130 823 A1**
(43) Date of publication of application: **15.02.2017**
(21) Application number: 15833147.0
(22) Date of filing: 19.08.2015
(51) Int. Cl.: F16H 55/48, F16C 19/06, F16C 35/067

(54) **BEARING-EQUIPPED RESIN PULLEY**

(30) Priority: 20.08.2014 JP 2014167870; 23.03.2015 JP 2015059282
(71) Applicant: NSK Ltd., Tokyo 141-8560 (JP)
(72) Inventor: ZHAO Runze, Fujisawa-shi Kanagawa 251-8501 (JP); KOGA Syo, Fujisawa-shi Kanagawa 251-8501 (JP)
(74) Representative: Naylor, Matthew John
(86) International application number: PCT/JP2015/073217
(87) International publication number: WO 2016/027828

(57) **Abstract**

A bearing-equipped resin pulley is equipped with a metal ring-shaped member (21) having an overall circular shape and pressed into the outer-diameter surface (3c) of an outer race (3), and has a resin pulley (15) integrally formed around the metal ring-shaped member (21). The metal ring-shaped member (21) comprises a cylindrical engaging part (23) for engaging the outer-diameter surface (3c) of the outer race (3) by being pressed therein, and a disc part (29) integrally formed in an upright manner in the perpendicular direction from the engaging part (23). Furthermore, the disc part (29) is provided with a plurality of holes (31) formed in the axial direction of the bearing (1) and arranged in the circumferential direction. As a result, it is possible to improve creep resistance even under harsh conditions of high rotation speed and high belt load.

## Description

### TECHNICAL FIELD

The present invention relates to a bearing-equipped resin pulley having a resin pulley integrally formed with an outer-diameter surface of an outer ring of a rolling bearing.

### RELATED ART

Since an idler pulley or the like, which is to be used for a timing belt of an automobile, is required to save weight and cost thereof, a resin pulley is integrally formed with an outer-diameter surface of an outer ring of a rolling bearing by injection molding, so that it is used as a bearing-equipped resin pulley.

However, the bearing-equipped resin pulley integrally formed in this way has different linear expansion coefficients between the metal outer ring and the resin pulley. Therefore, when the temperature increases, a connection force between the outer ring and the resin pulley is lowered due to the difference of thermal expansion. In addition, a circumferentially relative sliding (creep phenomenon) between the outer ring and the resin pulley may occur due to deformations of the outer ring and the resin pulley under high belt load and high rotation speed.

Therefore, Patent Document 1 discloses a technology of providing an outer peripheral surface of a bearing outer ring with a groove and performing knurling processing for a groove bottom of the groove so as to improve creep resistance of the bearing-equipped resin pulley. By the groove and the knurling processing performed for the groove bottom, when integrally forming the resin pulley with the outer-diameter surface of the outer ring by the injection molding, the connection force with the resin pulley is improved to increase the creep resistance.

### CITATION LIST

### PATENT DOCUMENTS

Patent Document 1: Japanese Patent Application Publication No. H11-148550A

### SUMARY OF THE INVENTION

### PROBLEMS TO BE SOLVED

In recent years, the belt load and the maximum rotation speed tend to further increase. However, according to the bearing-equipped resin pulley disclosed in Patent Document 1, the outer peripheral surface of the bearing outer ring conforming to JIS (Japanese Industrial Standards) standards is provided with the groove, so that the rigidity of the outer ring is lowered. For this reason, in particular, the deformations of the outer ring and the resin pulley increase under harsh conditions of high belt load and high rotation speed. Therefore, according to the related art, it is not possible to sufficiently prevent the creep phenomenon, i.e., to improve the creep resistance.

The present invention has been made in view of the above situations of the related art, and an object of the present invention is to provide a bearing-equipped resin pulley capable of improving creep resistance even under harsh conditions of high belt load and high rotation speed.

### MEANS FOR SOLVING THE PROBLEMS

In order to achieve the above object, a first invention of the present invention provides a bearing-equipped resin pulley having a resin pulley integrally formed with an outer-diameter-side of an outer ring of a rolling bearing.

The bearing-equipped resin pulley includes a metal ring-shaped member having an overall circular shape and fitted into an outer-diameter surface of the outer ring.

The resin pulley is integrally formed around the metal ring-shaped member.

The metal ring-shaped member has a cylindrical engaging part to be fitted and engaged with the outer-diameter surface of the outer ring and a disc part integrally formed in an upright manner in a perpendicular direction from the engaging part.

The disc part is provided with a plurality of holes formed in an axial direction of a bearing and arranged in a circumferential direction.

According to the present invention, the creep is difficult to occur between the outer ring and the metal ring-shaped member because they are formed of metal. When integrally forming the resin pulley with the outer-diameter surface of the outer ring by injection molding, for example, a resin material enters the plurality of holes provided for the disc part of the metal ring-shaped member and is integrally formed therewith.

Since the resin material enters the plurality of holes and is integrally formed therewith in this way, it is possible to strengthen a connection force between the outer ring and the resin pulley by the metal ring-shaped member and to improve creep resistance (to suppress a creep phenomenon).

Therefore, since the integration of the outer ring and the resin pulley can be improved, it is possible to improve the creep resistance even under harsh conditions of high belt load and high rotation speed.

Also, since it is not necessary to cut the outer-diameter surface of the outer ring so as to increase the connection force between the rolling bearing and the resin pulley, the rigidity is not damaged.

According to a second invention, in the first invention, the resin pulley has an outer peripheral surface which is a belt transmission surface, and
the metal ring-shaped member has a cylindrical part integrally formed therewith and protruding from an upper end of the disc part along the transmission surface.

According to the second invention, since the cylindrical part serves as a core of the resin pulley, it is possible to improve the creep resistance and the pulley strength.

According to a third invention, in the second invention, a width in the axial direction of the cylindrical part is not uniform in the circumferential direction.

According to the third invention, since the cylindrical part has a wedge effect at a contact part with the resin material, it is possible to improve the creep prevention effect between the resin material and the cylindrical part, as compared to a configuration where the width in the axial direction of the cylindrical part is uniform.

### EFFECTS OF THE INVENTION

According to the present invention, it is possible to provide the bearing-equipped resin pulley capable of improving the creep resistance even under harsh conditions of high belt load and high rotation speed.

### BREIF DESCRIPTION OF THE DRAWINGS

FIG. 1 is a perspective view depicting a first embodiment of the bearing-equipped resin pulley of the present invention, in which a part is omitted and a part is cross-sectionally shown.
FIG. 2 is a longitudinal sectional view of the bearing-equipped resin pulley of the first embodiment, in which a part is omitted.
FIG. 3 is an overall perspective view of a metal ring-shaped member configuring the bearing-equipped resin pulley of the first embodiment.
FIG. 4 is a perspective view depicting a second embodiment of the bearing-equipped resin pulley of the present invention, in which a part is omitted and a part is cross-sectionally shown.
FIG. 5 is a longitudinal sectional view of the bearing-equipped resin pulley of the second embodiment, in which a part is omitted.
FIG. 6 is an overall perspective view of a metal ring-shaped member configuring the bearing-equipped resin pulley of the second embodiment.
FIG. 7 is a perspective view depicting a third embodiment of the bearing-equipped resin pulley of the present invention, in which a part is omitted and a part is cross-sectionally shown.
FIG. 8 is a longitudinal sectional view of the bearing-equipped resin pulley of the third embodiment, in which a part is omitted.
FIG. 9 is an overall perspective view of a metal ring-shaped member configuring the bearing-equipped resin pulley of the third embodiment.
FIG. 10 is a perspective view depicting a fourth embodiment of the bearing-equipped resin pulley of the present invention, in which a part is omitted and a part is cross-sectionally shown.
FIG. 11 is a longitudinal sectional view of the bearing-equipped resin pulley of the fourth embodiment, in which a part is omitted.
FIG. 12 is a perspective view depicting a fifth embodiment of the bearing-equipped resin pulley of the present invention, in which a part is omitted and a part is cross-sectionally shown.
FIG. 13 is a longitudinal sectional view of the bearing-equipped resin pulley of the fifth embodiment, in which a part is omitted.

### DETAILED DESCRIPTION OF EMBODIMENTS

Hereinafter, embodiments of the present invention will be described with reference to the accompanying drawings.

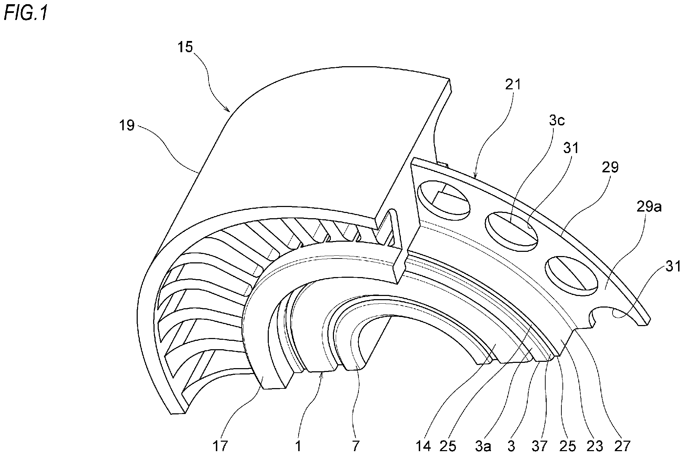

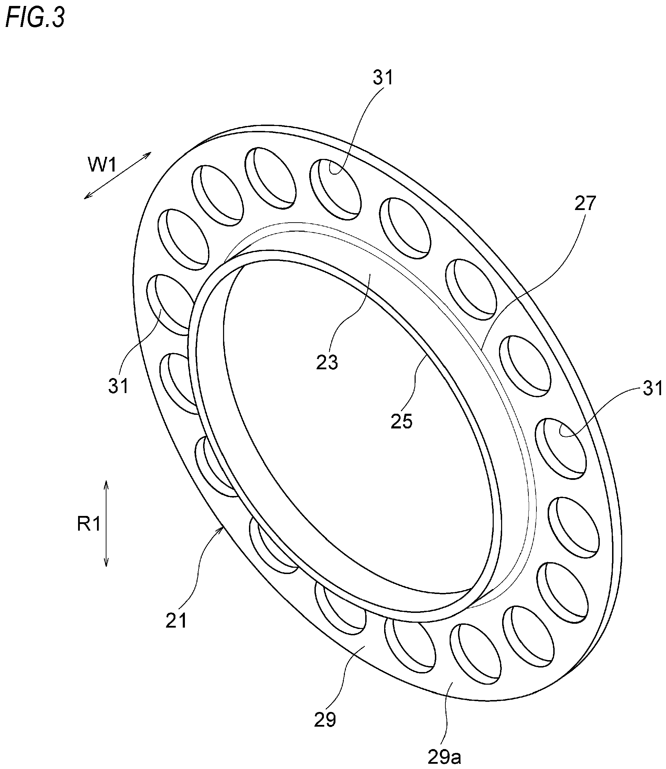

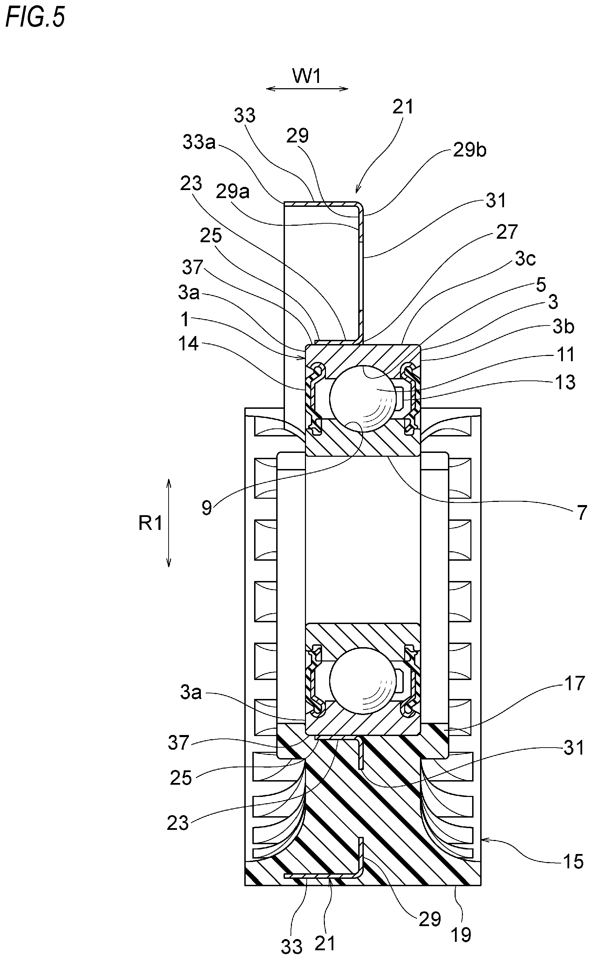

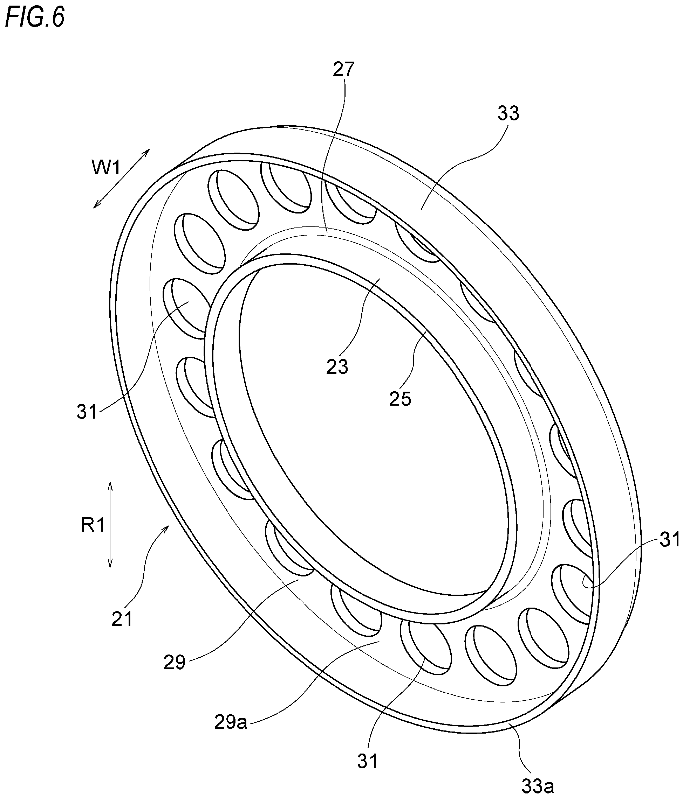

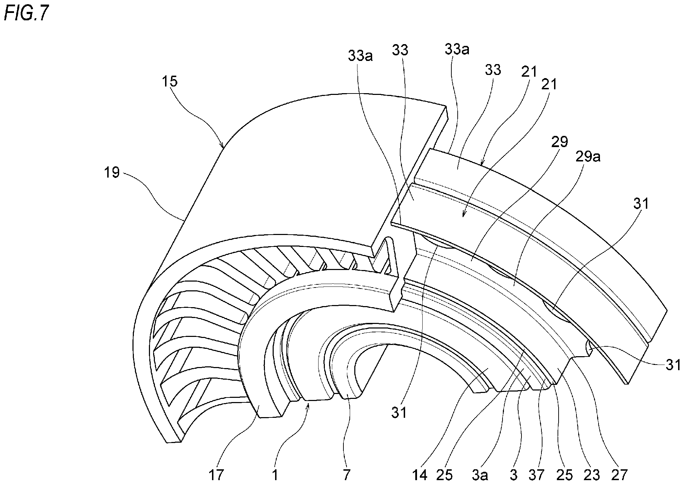

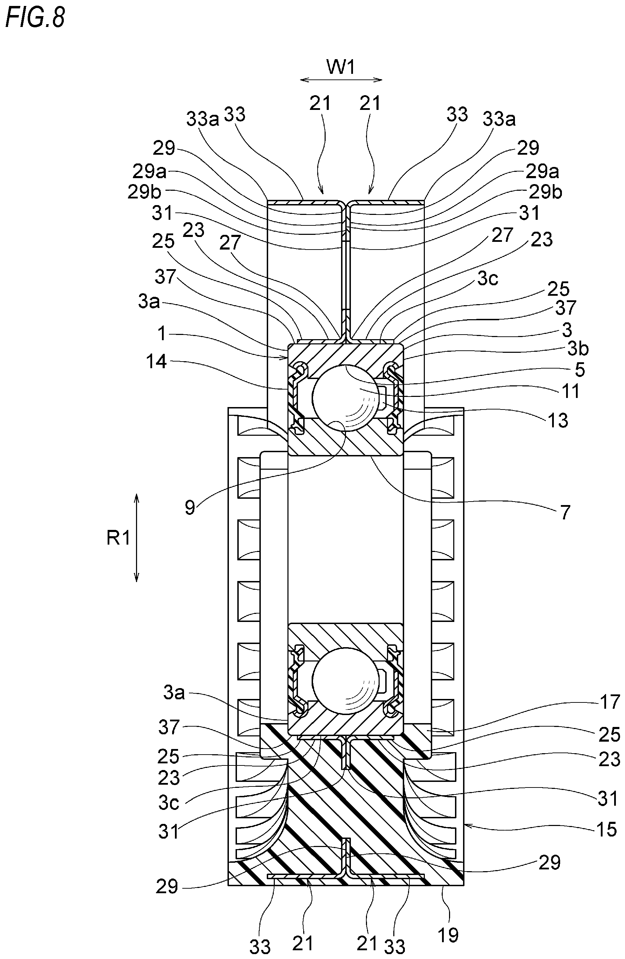

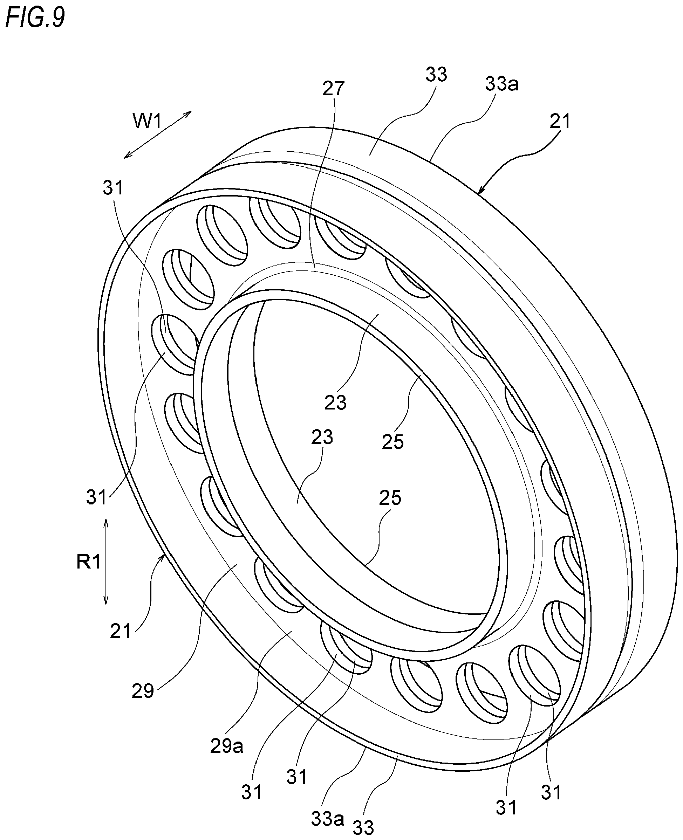

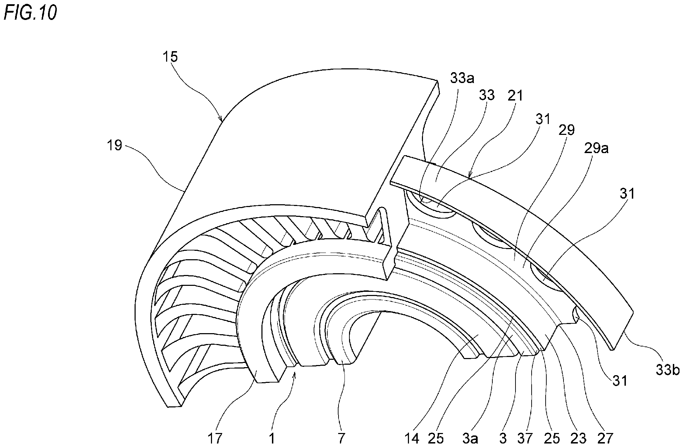

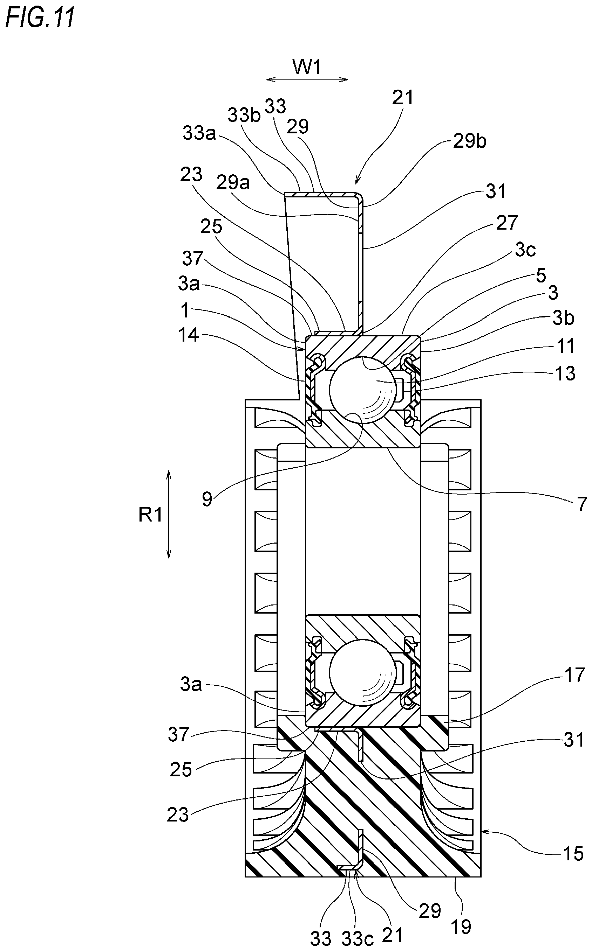

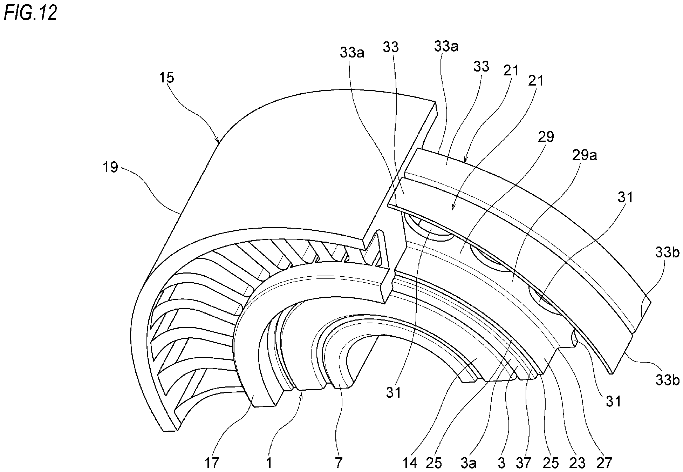

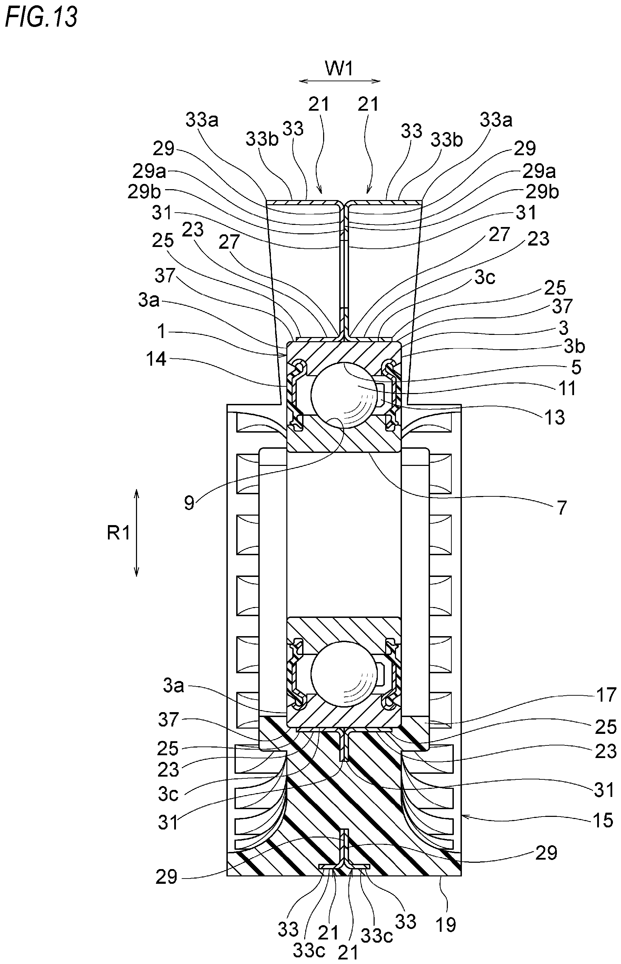

FIGS. 1 to 3 depict a first embodiment, FIGS. 3 to 6 depict a second embodiment, FIGS. 7 to 9 depict a third embodiment, FIGS. 10 and 11 depict a fourth embodiment, and FIGS. 12 and 13 depict a fifth embodiment.

In the meantime, the embodiments are just examples of the present invention, the present invention is not construed to be limited to the embodiments, and the embodiments can be design-changed within the scope of the present invention.

### First Embodiment

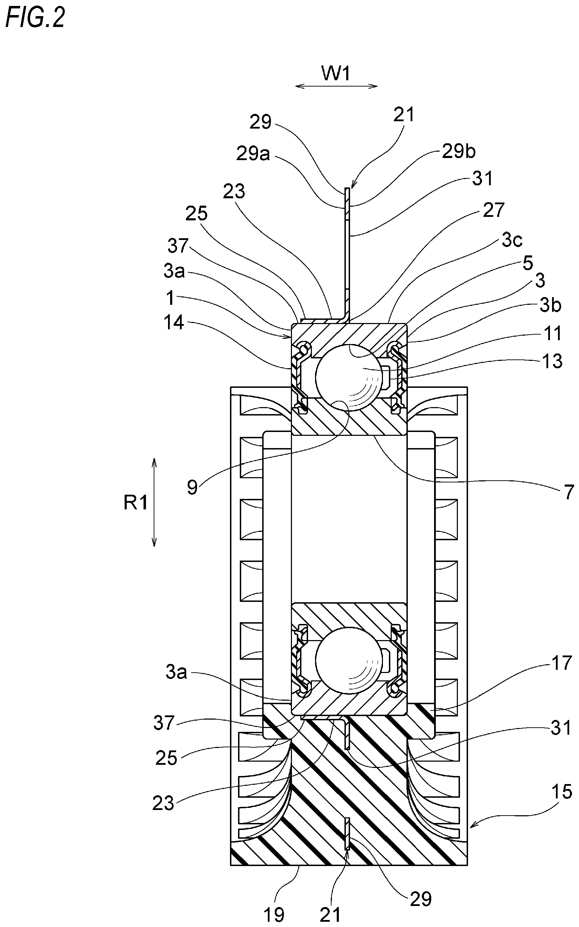

In a first embodiment, a resin pulley such as a resin idler pulley for a belt of an engine auxiliary device, a resin tensioner pulley for applying tension to a belt, and the like is assumed in which a resin pulley 15 is integrally formed with an outer-diameter surface 3c-side of an outer ring 3 of a rolling bearing 1 by injection molding, for example, and a surface part of an outer periphery 19 of the resin pulley 15 is configured as a belt transmission surface (refer to FIGS. 1 and 2).

The rolling bearing 1 has an outer ring 3 and an inner ring 7 configured to be relatively rotatable, a plurality of rolling elements (balls) 11 provided to be rollable via cage 13 between an outer ring-side raceway groove 5 continuously provided in a circumferential direction of an inner-diameter surface of the outer ring 3 and an inner ring-side raceway groove 9 continuously provided in the circumferential direction of an outer-diameter surface of the inner ring 7, and seal devices (ring-shaped seal members) 14 provided so as to seal an inside of the bearing (refer to FIG. 2).

In the meantime, the rolling bearing (ball bearing) 1 of the first embodiment is an example of the rolling bearing of the present invention, the present invention is not construed to be limited to the first embodiment, and the first embodiment can be design-changed within the scope of the present invention.

A metal ring-shaped member 21 has an overall circular shape and includes a cylindrical engaging part 23 configured to be fitted and engaged to the outer-diameter surface 3c of the outer ring 3 and a disc part 29 integrally formed in an upright manner in a perpendicular direction (i.e., radial direction) from the engaging part 23 (refer to FIGS. 1 to 3).

The engaging part 23 has a cylindrical shape having an inner diameter that can be fitted into the outer-diameter surface 3c of the outer ring 3 and a predetermined thickness in the radial direction (a direction denoted with an arrow R1).

Also, in the first embodiment, the engaging part 23 is arranged in conformity to an end portion 27 of the upright-formed side of the disc part 29 at a substantially central position in a width direction (a direction denoted with an arrow W1) of the outer-diameter surface 3c of the outer ring (refer to FIGS. 2 and 3).

Also, in the first embodiment, a ring-shaped step part 37 is formed between an end portion (an end portion of a free end side) 25 opposite to the end portion 27 and an end surface 3a of the outer ring 3 (refer to FIGS. 1 and 2).

In the meantime, although not shown, the engaging part 23 may be formed to have a wide shape over a substantially entire region in the width direction of the outer-diameter surface 3c of the outer ring 3. Thereby, the integration between the engaging part and the outer ring 3 is further improved.

The disc part 29 is formed to have a disc shape, which is formed in an upright manner continuously in the perpendicular direction from the end portion 27 of the engaging part 27 and has a predetermined thickness. The disc part 29 is provided with circular holes 31 configured to penetrate both left and right surfaces 29a, 29b (provided in an axial direction of the bearing). The holes 31 are arranged with equal intervals in a circumferential direction of the disc part 29 (refer to FIG. 2).

In the first embodiment, the plurality of holes 31 has the same diameter. However, the plurality of holes 31 may have different diameters. Also, the shape of the hole 31 is not limited to the circular shape and may have a polygonal shape or a complex shape so as to increase a contact area with the resin member.

Also, in the first embodiment, the holes are provided at the same position in the circumferential direction (centers of the respective holes 31 are located on a single circle). However, the holes may be provided in a zigzag manner or may be formed to have diverse diameters. That is, the holes are provided so as to improve a connection force with the resin pulley 15 and can be design-changed within the scope of the present invention.

Also, in the first embodiment, the hole 31 is a through-hole. However, even a hole (also referred to as a concave recess), which is not a through-hole, can increase the connection force with the resin pulley 15. Therefore, the hole, which is not a through-hole, is also included within the scope of the present invention. In this case, particularly, the holes (concave recesses), which are not the through-holes, are preferably provided on both left and right surfaces 29a, 29b, respectively.

The resin pulley 15 is integrally formed with the metal ring-shaped member 21 and the outer ring 3 by injection molding so that it covers the outer-diameter surface of the outer ring 3c of the rolling bearing 1, in the first embodiment, the metal ring-shaped member 21.

The resin pulley has a ring-shaped boss part 17 fixed over left and right end surfaces 3a, 3b of the outer ring 3 and a ring-shaped outer periphery 19 integrally formed in an upright manner from the boss part 17 and configured to put a belt thereon (refer to FIGS. 1 and 2).

In the meantime, the shape of the resin pulley 15 is not particularly limited to the shown embodiment, and can be design-changed within the scope of the present invention. In the first embodiment, the outer peripheral surface has a flat shape. However, a resin pulley having a pulley groove formed on an outer peripheral surface thereof is also included within the scope of the present invention.

According to the first embodiment, the creep is difficult to occur between the outer ring 3 and the metal ring-shaped member 21 because they are formed of metal.

Also, when integrally forming the resin pulley 15 with the outer-diameter surface 3c of the outer ring 3 by the injection molding, for example, a resin material enters the plurality of holes 31 provided for the disc part 29 of the metal ring-shaped member 21 and is integrally formed therewith.

Since the resin material enters the plurality of holes 31 and is integrally formed therewith in this way, it is possible to strengthen a connection force between the outer ring 3 and the resin pulley 15 by the metal ring-shaped member 21 and to improve creep resistance (to suppress a creep phenomenon).

Therefore, since the integration of the outer ring 3 and the resin pulley 15 can be improved, it is possible to improve the creep resistance even under harsh conditions of high belt load and high rotation speed.

Also, since it is not necessary to cut the outer-diameter surface 3c of the outer ring 3 so as to increase the connection force with the resin pulley 15, the rigidity is not damaged.

Also, according to the first embodiment, as described above, since the ring-shaped step part 37 is provided between the end portion 25 of the engaging part 23 and the end surface 3a of the outer ring 3, when the resin pulley 15 is integrally formed, the boss part 17 of the resin pulley 15 goes around and is fixed to the end surface 3a of the outer ring 3 via the step part 37. Therefore, the contact area increases, so that the connection force increases.

### Second Embodiment

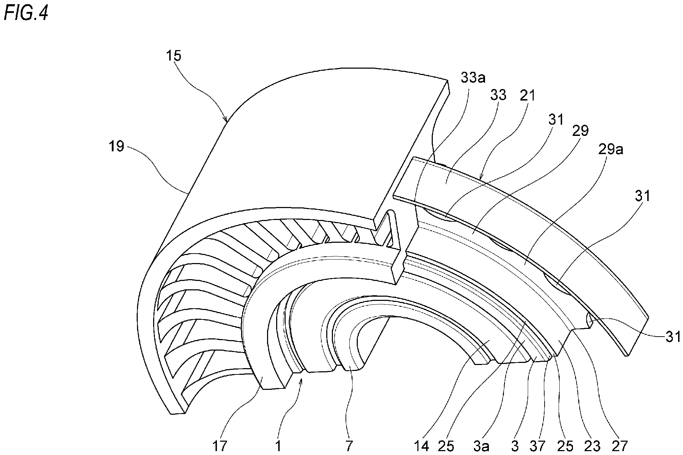

In a second embodiment, a cylindrical part 33 integrally protrudes from an upper end of the disc part 29 of the metal ring-shaped member 21 of the first embodiment along a transmission surface (an outer-diameter surface of the outer periphery 19) of the resin pulley 15 (refer to FIGS. 4 to 6).

The second embodiment is the same as the first embodiment, except that the cylindrical part 33 protrudes from the metal ring-shaped member 21. Therefore, the same parts are denoted with the same reference numerals and the descriptions thereof are omitted.

The cylindrical part 33 is formed to have a concentric circle shape to the engaging part 23 and a diameter greater than the engaging part 23 and is also formed to have a cylindrical shape wider than the engaging part 23 in a width direction (a direction denoted with an arrow W1) by folding back an upper end-side of the disc part 29 in the axial direction (the same direction as the protrusion direction of the engaging part 23) (refer to FIGS. 4 to 6).

The cylindrical part 33 is integrally formed in this way, so that the cylindrical part 33 serves as a core of the resin pulley 15. Therefore, it is possible to improve the creep resistance and the pulley strength.

On the other hand, the cylindrical part 33 may be formed to have a shape having the same width as the engaging part 23 or a shape having a width smaller than the engaging part 23. That is, the cylindrical part can be design-changed within the scope of the present invention.

Also, the cylindrical part 33 may have an end edge (a free end edge) 33a having a concave-convex shape in the circumferential direction or may be intermittently provided in the circumferential direction. That is, the cylindrical part can be appropriately design-changed within the scope of the present invention.

### Third Embodiment

In a third embodiment, the two metal ring-shaped members 21 of the second embodiment are provided and are respectively fitted into the outer-diameter surface 3c of the outer ring 3 from both left and right sides in the axial direction, and right surfaces (backsides) 29b, 29b of the respective disc parts 29, 29 are butted to each other (a back-to-back shape) (refer to FIGS. 7 to 9).

The third embodiment is the same as the first embodiment and the second embodiment, except that the two metal ring-shaped members 21 of the second embodiment are provided in the back-to-back shape. Therefore, the same parts are denoted with the same reference numerals and the descriptions thereof are omitted.

According to the third embodiment, the connection force with the outer ring 3 is increased by the engaging parts 23 fitted into the outer-diameter surface 3c of the outer ring 3 over the substantially entire region thereof. In addition, since the cylindrical parts 33 are respectively formed to have the wide shape, the pulley strength is further improved.

### Fourth Embodiment

In a fourth embodiment, the cylindrical part 33 integrally protrudes from the upper end of the disc part 29 of the metal ring-shaped member 21 along the transmission surface (the outer-diameter surface of the outer periphery 19) of the resin pulley 15, like the second embodiment. However, in the fourth embodiment, the width in the axial direction of the cylindrical part 33 is not uniform in the circumferential direction (refer to FIGS. 10 and 11).

Specifically, for example, the cylindrical part 33 is formed so that a part 33b having a maximum width in the axial direction and a part 33c having a minimum width in the axial direction are located at positions facing each other in the radial direction (the direction denoted with the reference numeral R1 in FIG. 11) (positions spaced by 180° in the circumferential direction), and is configured so that the width in the axial direction gradually decreases from the part 33b having a maximum width to the part 33c having a minimum width and the width in the axial direction gradually increases from the part 33c having a minimum width to the part 33b having a maximum width (refer to FIGS. 10 and 11).

That is, the end edge 33a of the cylindrical part 33 is configured to have a tapered shape between the part 33b having a maximum width in the axial direction and the part 33c having a minimum width in the axial direction (refer to FIGS. 10 and 11).

In the fourth embodiment, as shown in FIG. 11, the part 33c having a minimum width is configured to have a width in the axial direction smaller than the width in the axial direction of the engaging part 23. However, the present invention is not limited thereto. For example, the part 33c having a minimum width may be configured to have the same width in the axial direction as the width in the axial direction of the engaging part 23 or to have a width in the axial direction greater than the width in the axial direction of the engaging part 23.

The fourth embodiment is the same as the second embodiment, except for the shape of the cylindrical part 33. Therefore, the same parts are denoted with the same reference numerals and the descriptions thereof are omitted.

Also, in the fourth embodiment, the cylindrical part 33 between the part 33b having a maximum width and the part 33c having a minimum width is configured so that the width in the axial direction gradually changes. However, the present invention is not limited thereto. For example, all configurations where the width in the axial direction is not uniform in the circumferential direction are included within the scope of the fourth embodiment.

According to the fourth embodiment, the tapered cylindrical part 33 has a wedge effect at the contact part with the resin pulley 15 (resin material). Therefore, as compared to a configuration where the width in the axial direction of the cylindrical part 33 is uniform, the connection force between the resin pulley 15 (resin material) and the cylindrical part 33 is increased to improve the creep prevention effect.

### Fifth Embodiment

In a fifth embodiment, the two metal ring-shaped members 21 of the fourth embodiment are provided and are respectively fitted into the outer-diameter surface 3c of the outer ring 3 from both left and right sides in the axial direction, and right surfaces (backsides) 29b, 29b of the respective disc parts 29, 29 are butted to each other (a back-to-back shape) (refer to FIGS. 12 and 13).

In the fifth embodiment, the cylindrical parts 33, 33 are configured by arranging the parts 33b, 33b having a maximum width and the parts 33c, 33c having a minimum width in the back-to-back shape each other, respectively.

The fifth embodiment is the same as the first to fourth embodiments, except that the two metal ring-shaped members 21 of the fourth embodiment are provided in the back-to-back shape. Therefore, the same parts are denoted with the same reference numerals and the descriptions thereof are omitted.

According to the fifth embodiment, the connection force with the outer ring 3 is increased and the wedge effect of the cylindrical part 33 is improved by the engaging parts 23 fitted into the outer-diameter surface 3c of the outer ring 3 over the substantially entire region thereof. Therefore, the connection force further increases, so that the creep prevention effect is further improved.

Meanwhile, in the fifth embodiment, the cylindrical parts 33, 33 are configured by arranging the parts 33b, 33b having a maximum width and the parts 33c, 33c having a minimum width in the back-to-back shape each other, respectively. However, the present invention is not limited thereto. For example, the parts 33b, 33b having a maximum width and the parts 33c, 33c having a minimum width may be arranged with being offset in the circumferential direction, which is also included within the scope of the present invention. By this configuration, it is also possible to accomplish the wedge effect.

### INDUSTRIAL APPLICABILITY

The present invention can be applied to a resin idler pulley for a belt of an engine auxiliary device, a resin tensioner pulley for applying tension to a belt, and the like.

The subject application is based on a Japanese Patent Application No. 2014-167870 filed on August 20, 2014 and a Japanese Patent Application No. 2015-59282 filed on March 23, 2015, which are here incorporated by reference.

### Description of Reference Numerals

- 1:: rolling bearing
- 3:: outer ring
- 3c:: outer-diameter surface
- 15:: resin pulley
- 21:: metal ring-shaped member
- 23:: engaging part
- 29:: disc part
- 31:: hole
- 33:: cylindrical part

## Claims

1. A bearing-equipped resin pulley comprising:
a resin pulley integrally formed with an outer-diameter-side of an outer ring of a rolling bearing; and
a metal ring-shaped member having an overall circular shape and fitted into an outer-diameter surface of the outer ring,
wherein the resin pulley is integrally formed around the metal ring-shaped member,
wherein the metal ring-shaped member comprises:
a cylindrical engaging part to be fitted and engaged with the outer-diameter surface of the outer ring; and
a disc part integrally formed in an upright manner in a perpendicular direction from the engaging part, and
wherein the disc part is provided with a plurality of holes formed in an axial direction of a bearing and arranged in a circumferential direction.

2. The bearing-equipped resin pulley according to claim 1,
wherein the resin pulley has an outer peripheral surface which is a belt transmission surface, and
wherein the metal ring-shaped member has a cylindrical part integrally formed therewith and protruding from an upper end of the disc part along the transmission surface.

3. The bearing-equipped resin pulley according to claim 2,
wherein a width in the axial direction of the cylindrical part is not uniform in the circumferential direction.
